# EUROPÄISCHE PATENTSCHRIFT

(11) **EP 2 808 188 B1**
(45) Veröffentlichungstag und Bekanntmachung des Hinweises auf die Patenterteilung: **06.11.2019**
(21) Anmeldenummer: 14001340.0
(22) Anmeldetag: 12.04.2014
(51) Int. Cl.: B60G 9/00, B60G 7/00, B60G 11/46, B60G 11/28

(54) **Parabellenker**
Parabolic link
Lien parabolique

(30) Priorität: 27.05.2013 DE 102013008879
(43) Veröffentlichungstag der Anmeldung: 03.12.2014
(73) Patentinhaber: Schomäcker Federnwerk GmbH, 49324 Melle (DE)
(72) Erfinder: Temmen, Hubert, 49716 Meppen (DE); Dr.-Ing. Bispink, Torsten, 49086 Osnabrück (DE)
(74) Vertreter: Pott, Ulrich

(56) Entgegenhaltungen:
- EP-A1- 1 632 370
- EP-A1- 2 363 308
- EP-A2- 1 138 432
- EP-A2- 1 958 801
- WO-A1-2012/154032
- CA-A1- 2 727 344

## Beschreibung

Die Erfindung bezieht sich auf einen Parabellenker mit einem an einem Parabellenkerende vorgesehenen gerollten Auge und einem dem Parabellenkerauge gegenüberliegenden Parabellenkerendbereich, wobei zwischen dem Parabellenkerauge und dem gegenüberliegenden Parabellenkerendbereich ein gegensinnig abgekröpfter Zwischenbereich vorgesehen ist.

Parabellenker sind Bauteile für insbesondere Nutzfahrzeugauflieger und -anhänger, bei denen sich Luftfederungssysteme mit Parabellenkern weitestgehend durchgesetzt haben. Der dem gerollten Auge gegenüberliegende Parabellenkerendbereich ist insbesondere flach ausgebildet und bietet die Anbindung an beispielsweise einen Luftbalg und ist daher vielfach als Balgauflage ausgebildet.

Parabellenker sind jedoch schwergewichtige Bauteile, so dass angestrebt wird, das Eigengewicht solcher Parabellenker zu verringern und die für die Produktion solcher Parabellenker erforderlichen Energieaufwendungen zu verringern.

Aus der EP 1 138 432 A1 ist ein Parabellenker bekannt mit einem zwischen dem Parabellenkerauge und dem gegenüberliegenden Parabellenkerendbereich gegensinnig abgekröpften Zwischenbereich, wobei der dem Parabellenkerauge gegenüberliegende Parabellenkerendbereich sich bis zu seinem Ende hin verjüngt mit einer abgerundeten Spitze. Der abgekröpfte Zwischenbereich ist geplättet ausgebildet, so dass er sich ausgehend von dem gerollten Auge verbreitert. Dies dient dazu, insbesondere Auflageflächen zu verbreitern, an denen ein Luftbalg zu verspannen ist. Der Parabellenker ist dennoch ein relativ schwergewichtiges Bauteil.

Aus der EP 1 958 801 A2, die den Oberbegriff des Anspruchs 1 offenbart, ist ein Parabellenker der eingangs genannten Art bekannt mit einem dem gerollten Auge gegenüberliegenden Parabellenkerendbereich, der mit zwei mit Abstand zueinander vorgesehenen Lochausnehmungen versehen ist. Es ist Aufgabe der vorliegenden Erfindung, einen Parabellenker derart weiterzubilden, dass er in leichterer Weise den größeren Beanspruchungen gerecht werden kann.

Zur Lösung dieser Aufgabe zeichnet sich der Parabellenker der eingangs genannten Art durch die im Patentanspruch 1 angegebenen Merkmale aus.

Damit ist ein Parabellenker geschaffen, der durch die im Parabellenkerendbereich vorgesehene Sicke während des Produktionsprozesses breiter auszubilden ist zwecks Schaffung einer größeren Kontaktfläche mit beispielsweise einem Luftbalg, der jedoch durch die Sicken Festigkeitsbeanspruchungen erfüllen kann, die gegenüber bisherigen Parabellenkerendgestaltungen wesentlich erhöht ist bei gleichem Materialeinsatz. Damit ist ein Parabellenker vorzuhalten, der bei gegenüber bisherigen Parabellenkern gleichem Gewicht erhöhten Festigkeitsbeanspruchungen gerecht werden kann bzw. gleiche Festigkeitseigenschaften bei geringerem Gewicht aufweist. Zudem ist dieser Bereich bei gleichem Materialeinsatz breiter auszubilden.

Die an dem Parabellenkerende vorzusehende Sicke bzw. Rille kann während beispielsweise eines Schmiedevorganges von unten oder von oben eingedrückt werden und beispielsweise zu der Stirnseite des Parabellenkerendes, also der Außenseite des Parabellenkers, offen ausgebildet sein. Die Rille bzw. die Sicke kann abgestuft ausgebildet sein, d. h., dass sie ein größeres Maß in ihrem Übergang in die Oberfläche des Parabellenkerendbereich hat als gegenüber der Grundfläche der Sicke bzw. der Rille. Bevorzugtermaßen sind Befestigungsaufnahmen zur Durchführung von beispielsweise Zugankern in dem Parabellenkerendbereich dort vorgesehen, wo die Rille bzw. die Sicke vorgesehen ist.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: in einer perspektivischen Ansicht ein Ausführungsbeispiel eines Parabellenkers mit einer Sicke im platten Endbereich (die der Unterseite), die offen zu einer Stirnseite ausgebildet ist;
- Fig. 2: eine Draufsicht auf das Ausführungsbeispiel nach Fig. 1;
- Fig. 3: eine Querschnittsdarstellung (ausschnittsweise) des Ausführungsbeispiels nach Fig. 1.

In der Zeichnung sind grundsätzlich übereinstimmende Teile mit übereinstimmenden Bezugsziffern versehen. Allgemein mit 1 ist der Parabellenker beziffert, der an einem Parabellenkerendbereich ein gerolltes Auge 2 sowie ein dem gerollten Auge 2 gegenüberliegenden Parabellenkerendbereich 3 aufweist mit einem Zwischenbereich 4, der gegensinnig abgekröpft ausgebildet ist. Der dem gerollten Auge 2 gegenüberliegende Parabellenkerendbereich 3 ist breiter ausgebildet als der Zwischenbereich 4 und hat eine Sicke 5, die zu dem Stirnende 6 des Parabellenkers 1 bei 7 offen ausgebildet ist. Ausgehend von der Oberfläche 8 ist bis zum Sickengrund 9 hin die Sicke 5 abgestuft ausgebildet und weist Befestigungsaufnahmen 10 für Befestigungsmittel auf.

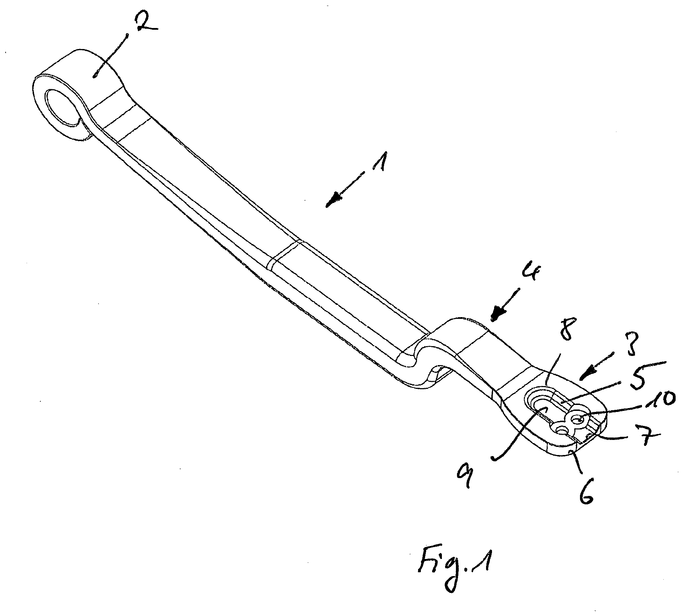

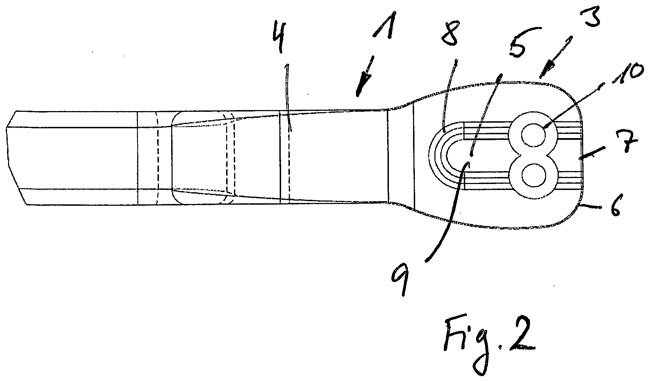

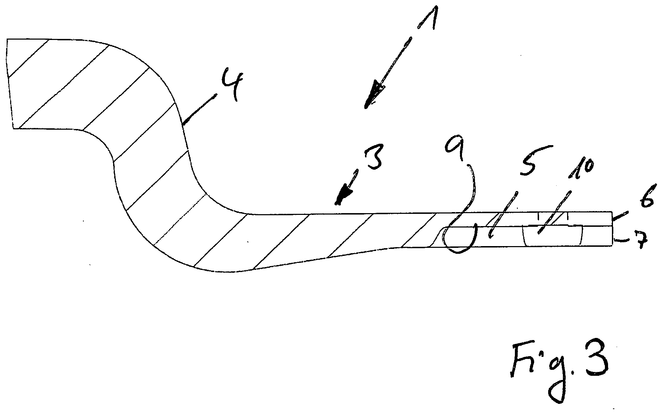

Fig. 2 zeigt ausschnittsweise eine Draufsicht auf das Ausführungsbeispiel nach Fig. 1 mit der bei 7 und der Stirnseite 6 hin offenen Sicke 5. Fig. 3 verdeutlicht die Darstellungen in einer ausschnittsweise gezeigten Querschnittsdarstellung die offene Ausbildung der Sicke gemäß dem Ausführungsbeispiel nach Fig. 1 und Fig. 2.

## Patentansprüche

1. Parabellenker (1) mit einem an einem Parabellenkerende vorgesehenen gerollten Parabelllenkerauge (2) und mit einem dem gerollten Parabellenkerauge (2) gegenüberliegenden Parabellenkerendbereich (3), wobei zwischen dem Parabellenkerauge (2) und dem gegenüberliegenden Parabellenkerendbereich (3) ein gegensinnig abgekröpfter Zwischenbereich (4) vorgesehen ist, **dadurch gekennzeichnet, dass** der dem gerollten Parabellenkerauge (2) gegenüberliegende Parabellenkerendbereich (3) mit einer Sicke (5) ausgebildet ist, dass der Parabellenkerendbereich (3) gegenüber dem abgekröpften Zwischenbereichen (4) breiter ausgebildet ist und dass die in dem Parabellenkerendbereich (3) vorgesehene Sicke (5) zu einer Stirnseite (6) des Parabellenkerendbereiches (3) hin offen ausgebildet ist.

2. Parabellenker (1) nach Anspruch 1, **dadurch gekennzeichnet, dass** in dem Parabellenkerendbereich (3) in der Sicke (5) Befestigungsaufnahmen (10) vorgesehen sind.

3. Parabellenker nach Anspruch 1 oder 2, **dadurch gekennzeichnet, dass** die Sicke (5) bezogen auf ihre Hocherstreckung abgestuft ausgebildet ist.

4. Parabellenker nach einem der Ansprüche 1 bis 3, **dadurch gekennzeichnet, dass** die Sicke (5) an der Unterseite und/oder an der Oberseite des Parabellenkerendbereichs (3) vorgesehen ist.

## Claims

1. Parabolic link (1) comprising a rolled parabolic link eye (2) provided on one parabolic link end and comprising a parabolic link end region (3) opposite the rolled parabolic link eye (2), an intermediate region (4) bent at right angles in opposite directions being provided between the parabolic link eye (2) and the opposite parabolic link end region (3), **characterised in that** the parabolic link end region (3) opposite the rolled parabolic link eye (2) is designed having a bead (5), **in that** the parabolic link end region (3) is wider than the bent intermediate region (4), and **in that** the bead (5) provided in the parabolic link end region (3) is open towards an end face (6) of the parabolic link end region (3).

2. Parabolic link (1) according to claim 1, **characterised in that** fastening receptacles (10) are provided in the parabolic link end region (3) in the bead (5).

3. Parabolic link according to either claim 1 or claim 2, **characterised in that** the bead (5) is stepped with respect to the upwards extent thereof.

4. Parabolic link according to any of claims 1 to 3, **characterised in that** the bead (5) is provided on the lower face and/or on the upper face of the parabolic link end region (3).

## Revendications

1. Lien parabolique (1) avec un œillet de lien parabolique enroulé (2) prévu au niveau d'une extrémité de lien parabolique et avec une région d'extrémité de lien parabolique (3) opposée à l'œillet de lien parabolique enroulé (2), dans lequel une région intermédiaire coudée en sens inverse (4) est prévue entre l'œillet de lien parabolique (2) et la région d'extrémité de lien parabolique opposée (3), **caractérisé en ce que** la région d'extrémité de lien parabolique (3) opposée à l'œillet de lien parabolique enroulé (2) est réalisée avec un bourrelet (5), de sorte que la région d'extrémité de lien parabolique (3) en face de la région intermédiaire coudée (4) est réalisée plus large et de sorte que le bourrelet (5) prévu dans la région d'extrémité de lien parabolique (3) est réalisé ouvert vers un côté avant (6) de la région d'extrémité de lien parabolique (3).

2. Lien parabolique (1) selon la revendication 1, **caractérisé en ce que** des logements de fixation (10) sont prévus dans la région d'extrémité de lien parabolique (3) dans le bourrelet (5).

3. Lien parabolique selon la revendication 1 ou 2, **caractérisé en ce que** le bourrelet (5) est réalisé de manière graduée par rapport à son extension en hauteur.

4. Lien parabolique selon l'une quelconque des revendications 1 à 3, **caractérisé en ce que** le bourrelet (5) est prévu au niveau de la face inférieure et/ou au niveau de la face supérieure de la région d'extrémité de lien parabolique (3).
